# EUROPÄISCHE PATENTSCHRIFT

(11) **EP 2 503 928 B1**
(45) Veröffentlichungstag und Bekanntmachung des Hinweises auf die Patenterteilung: **08.01.2014**
(21) Anmeldenummer: 11810783.8
(22) Anmeldetag: 07.10.2011
(51) Int. Cl.: A47J 36/04, A47J 37/10

(54) **KOCHBEHÄLTER MIT ANTIHAFTBESCHICHTUNG**
COOKING VESSEL HAVING A NON-STICK COATING
RÉCIPIENT DE CUISSON DOTÉ D'UN REVÊTEMENT ANTI-ADHÉSIF

(30) Priorität: 07.10.2010 DE 202010008753 U
(43) Veröffentlichungstag der Anmeldung: 03.10.2012
(73) Patentinhaber: Warimex Waren-Import Export Handels-GmbH, 77743 Neuried (DE)
(72) Erfinder: LEE, ChangHo, Guangdong (CN); PARK, SuChin, Busan (KR)
(74) Vertreter: Vomberg, Friedhelm
(86) Internationale Anmeldenummer: PCT/DE2011/001814
(87) Internationale Veröffentlichungsnummer: WO 2012/045306

(56) Entgegenhaltungen:
- EP-A1- 0 515 705
- WO-A1-2007/123353
- WO-A2-2010/043826
- US-A1- 2008 083 747

## Beschreibung

Die vorliegende Erfindung betrifft einen Kochbehälter mit Antihaftbeschichtung, insbesondere eine Pfanne mit Antihaftbeschichtung.

Derzeit wird üblicherweise ein Topf oder eine Pfanne aus Metall zum Braten von Lebensmitteln verwendet. Bei herkömmlichen Töpfen oder Pfannen entstehen beim Braten oft haftende oder verkohlte Beläge. Dadurch wird nicht nur das Aussehen der Lebensmittel beeinträchtigt, sondern durch verbrannte und verkohlte Lebensmittel können auch Schadstoffe entstehen, die die Gesundheit der Verbraucher beieinträchtigen. Außerdem wird dadurch auch die Reinigung des Topfes oder der Pfanne erschwert.

Aus diesem Grund werden im Allgemeinen Töpfe und Pfannen mit sogenannter Teflonbeschichtung verwendet. Die Teflonbeschichtung hat eine Antihaftwirkung. Allerdings wird beim Kochen und Abwaschen die Oberflächenbeschichtung des Topfes oder der Pfanne, beispielsweise durch die Berührung mit einem Pfannenwender oder mit einem Reinigungswerkzeug, oft abgerieben, was zur Beschädigung der Antihaftschicht führt, wodurch die Antihaftwirkung verloren geht. Durch die abgeblätterten Beschichtungen, die sich mit der Nahrung vermischen können, kann auch die Gesundheit der Verbraucher beeinträchtigt werden, wenn die abgeblätterten Bestandteile mit der Nahrung aufgenommen werden.

Ausgehend von diesem Stand der Technik liegt der Erfindung daher die Aufgabe zugrunde, einen Kochbehälter mit sicherer und lang wirkender Antihaftung bereitzustellen.

Diese Aufgabe wird durch einen Kochbehälter mit den im unabhängigen Anspruch angegebenen Merkmalen gelöst.

Der Kochbehälter umfasst einen Griff und einen Behälterkörper. Die innere Oberfläche des Behälterkörpers verfügt über eine Vielzahl von verbundenen oder unverbundenen Ölvertiefungen. Der Boden der Ölvertiefungen ist mit mehreren kleinen Noppen versehen. Die Höhe der kleinen Noppen ist kleiner als die Tiefe der Ölvertiefungen. Ferner ist auf dem Boden der Ölvertiefungen einen gleichmäßig ausgebildete Antihaftbeschichtung vorgesehen. Die Dicke der Antihaftbeschichtung ist größer als die Höhe der kleinen Noppen und zugleich kleiner als die Tiefe der Ölvertiefungen.

Die vorteilhafte Wirkung der vorliegenden Erfindung ist die folgende: Da auf der inneren Oberfläche des Behälterkörpers eine Vielzahl von unverbundenen oder verbundenen Ölvertiefungen angeordnet sind, wird das in den Ölvertiefungen gelagerte Speiseöl im Topf bis zum Sieden erhitzt. Durch das Anheben des siedenden Speiseöls und dessen Verteilung schwebt die Nahrung leicht, so dass die Nahrung den Pfannenboden nicht unmittelbar berührt. Ferner ist der Boden der Öivertiefungen gleichmäßig mit mehreren kleinen Noppen versehen, durch deren Verwendung die Haftfestigkeit der Antihaftbeschichtung wirksam verstärkt und abgesichert wird, so dass auch nach langzeitigem Gebrauch der Pfanne die Antihaftbeschichtung nicht abblättert, was durch die Abreichung aufgrund der Berührung eines Pfannenwenders oder eines Reinigungswerkzeuges mit der Pfanne verursacht werden kann, so dass auf diese Weise des Ziel der Verwendungssicherheit erreicht wird.

Weitere Vorteile und Eigenschaften der Erfindung gehen aus der nachfolgenden Beschreibung hervor, in der Ausführungsbeispiele der Erfindung anhand der Zeichnung im Einzelnen erläutert werden. Es zeigen:
- Fig. 1: eine Aufsicht auf eine Ausführungsform der vorliegenden Erfindung,
- Fig. 2: eine Querschnittsansicht entlang der Schnittlinie A-A aus Fig. 1,
- Fig. 3: eine vergrößerte Darstellung des Ausschnitts B aus Fig. 2.

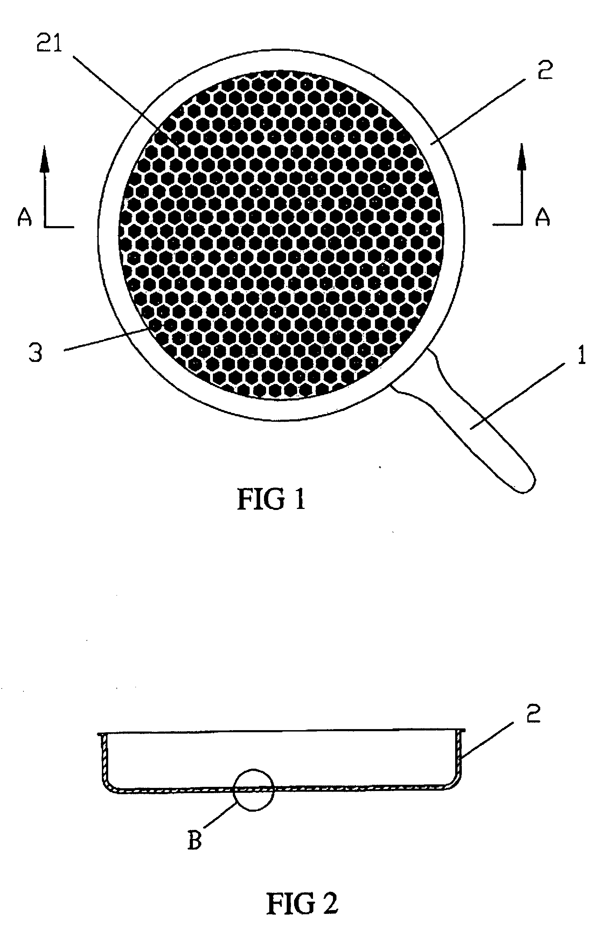

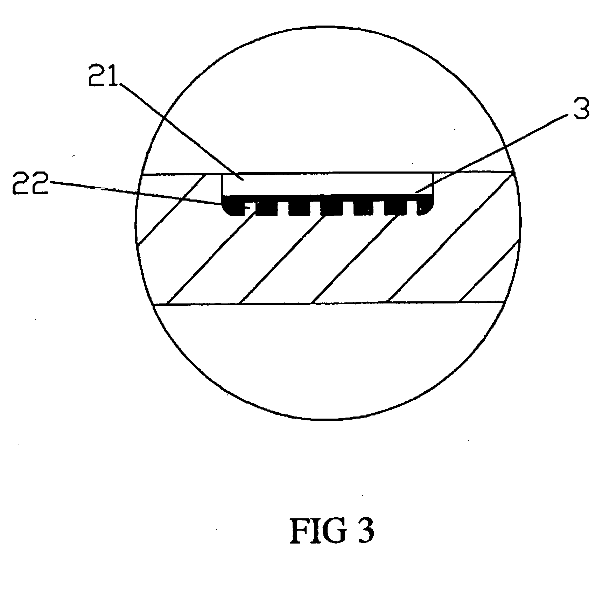

Die Erfindung wird nachfolgend anhand einer Pfanne mit Antihaftbeschichtung näher erläutert. Anhand der Fig. 1, Fig. 2 und Fig. 3 ist erkennbar, dass die Pfanne einen Griff 1 und einen Pfannenkörper 2 umfasst. Die innere Oberfläche des Pfannenkörpers 2 umfasst eine Vielzahl von verbundenen oder unverbundenen Ölvertiefungen 21, die gleichmäßig über die innere Oberfläche verteilt sind. Die vorstehenden Ölvertiefungen 21 können; wie in Fig. 1 erkennbar, mit sechseckigem, rundem, quadratischem, polygonalem oder irgendeinem anderen Querschnitt ausgebildet sein. Der Boden der Ölvertiefungen 21 ist gleichmäßig mit kleinen Noppen 22 versehen, die untereinander verbunden oder unverbunden angeordnet sein können. Die Noppen 22 können zylinderförmig oder säulenartig mit quadratischem Querschnitt ausgebildet sein. Je nach Bedarf können die Ölvertiefungen 21 und die kleinen Noppen auch anders geformt und angeordnet sein.

Die Höhe der oben genannten kleinen Noppen 22 ist kleiner als die Tiefe der Ölvertiefungen 21. Die Tiefe der vorstehenden Ölvertiefungen 21 liegt ungefähr zwischen 0,1 mm und 0,3 mm.

Auf dem Boden oder auf der Innenseite der Ölvertiefungen 21 ist eine Antihaftbeschichtung 3 ausgebildet. Die Antihaftbeschichtung 3 kann auf der Grundlage von Polytetrafluorethylen (= "Teflon") hergestellt sein. Die Dicke der oben genannten Antihaftbeschichtung 3 beträgt bis zu 0,1 mm. Die Dicke der oben genannten Antihaftbeschichtung 3 ist wenigstens 0,05 mm geringer als die Tiefe der Ölvertiefungen 21, wobei die Dicke der Antihaftbeschichtung 3 größer als die Höhe der kleinen Noppen 22 und zugleich kleiner als die Tiefe der Ölvertiefungen 21 ist.

Um die antihaftende Wirkung zu verbessern, belegen die Ölvertiefungen 21 über 70% der inneren Oberfläche des Pfannenkörpers 2 oder zumindest des Bodens des Pfannenkörpers 2. Darüber hinaus liegt der Abstand zwischen nebeneinander liegenden Ölvertiefungen unterhalb von 1 mm.

Da auf der inneren Oberfläche des Pfannenkörpers 2 eine Vielzahl der unverbundenen oder verbundenen Ölvertiefungen 21 angeordnet ist, wird das in den Ölvertiefungen 21 gelagerte Speiseöl im Topf bis zum Sieden erhitzt. Durch das Anheben des siedenden Speiseöls und dessen Verteilung schwebt die Nahrung leicht, so dass die Nahrung den Pfannenboden nicht unmittelbar berührt. Ferner ist der Boden der Ölvertiefungen 21 gleichmäßig mit mehreren kleinen Noppen 22 versehen, durch deren Verwendung die Haftfestigkeit der Antihaftbeschichtung 3 wirksam verstärkt und abgesichert wird, so dass auch nach langzeitigem Gebrauch der Pfanne die Antihaftbeschichtung 3 nicht abblättert, was durch die Abreibung aufgrund der Berührung eines Pfannenwenders oder eines Reinigungswerkzeuges mit der Pfanne verursacht werden kann, so dass auf diese Weise das Ziel der Verwendungssicherheit erreicht wird.

Die Erfindung wurde hier am Beispiel einer Pfanne erläutert. Die Erfindung kann aber auch bei anderen Kochbehältern angewandt werden, die zum Garen, insbesondere Braten, Schmoren oder Dünsten verwendet werden.

## Patentansprüche

1. Kochbehälter mit Antihaftbeschichtung mit einem Griff (1) und einem Behälterkörper (2),
wobei
- die innere Oberfläche des Behälterkörpers (2) mit einer Vielzahl von Ölvertiefungen (21) versehen ist, deren Innenseite mit Noppen (22) versehen ist, deren Höhe kleiner als die Tiefe der Ölvertiefungen ist, und wobei
- die obere Oberfläche der Ölvertiefungen (21) mit einer Antihaftbeschichtung (3) versehen ist, wobei die Dicke der Antihaftbeschichtung (3) größer als die Höhe der Noppen (22) und zugleich kleiner als die Tiefe der Ölvertiefungen (21) ist.

2. Kochbehälter nach Anspruch 1, **dadurch gekennzeichnet, dass** die Ölvertiefungen (21) verbunden oder unverbunden ausgebildet sind.

3. Kochbehälter nach Anspruch 1 oder 2, **dadurch gekennzeichnet, dass** die Ölvertiefungen (21) mit einer gleichmäßigen Antihaftbeschichtung (3) versehen sind.

4. Kochbehälter nach einem der Ansprüche 1 bis 3, **dadurch gekennzeichnet, dass** die oben genannten Ölvertiefungen (21) mit sechseckigem, runden, quadratischem oder polygonalem Querschnitt ausgebildet sind.

5. Kochbehälter nach einem der Ansprüche 1 bis 4, **dadurch gekennzeichnet, dass** die Noppen (22) zylinderförmig oder als Säulen mit viereckigem Querschnitt ausgebildet sind.

6. Kochbehälter nach einem der Ansprüche 1 bis 5, **dadurch gekennzeichnet, dass** die oben genannten Ölvertiefungen (21) über 70% der inneren Oberfläche des Behälterkörpers belegen.

7. Kochbehälter nach einem der Ansprüche 1 bis 6, **dadurch gekennzeichnet, dass** die Tiefe der Ölvertiefungen (21) zwischen 0,1 mm und 0,3 mm liegt.

8. Kochbehälter nach einem der Ansprüche 1 bis 7, **dadurch gekennzeichnet, dass** die Dicke der Antihaftbeschichtung (3) bis zu 0,1 mm beträgt.

9. Kochbehälter nach einem der Ansprüche 1 bis 8, **dadurch gekennzeichnet, dass** der Abstand zwischen nebeneinander liegenden Ölvertiefungen (21) unterhalb von 1 mm liegt.

10. Kochbehälter nach einem der Ansprüche 1 bis 9, **dadurch gekennzeichnet, dass** die Dicke der Antihaftbeschichtung (3) wenigstens 0,05 mm unterhalb der Tiefe der Ölvertiefungen (21) liegt.

## Claims

1. Cooking vessel with a nonstick coating, a handle (1) and a vessel body (2), whereby the inner surface of the vessel body (2) is provided with a multiplicity of oil cavities (21) whose interiors are provided with studs (22) whose heights are less than the depth of the oil cavities, and whereby
the upper surface of the oil cavities (21) is provided with a nonstick coating (3) whereby the thickness of the nonstick coating (3) is greater than the height of the studs (22) and at the same time less than the depth of the oil cavities (21).

2. Cooking vessel according to claim 1, **characterized in that** the oil cavities (21) are connected or disconnected.

3. Cooking vessel according to claim 1 or 2, **characterized in that** the oil cavities (21) are provided with a uniform nonstick coating (3).

4. Cooking vessel according to none of claims 1 to 3, **characterized in that** the above-mentioned oil cavities (21) are of hexagonal, round, square or polygonal section.

5. Cooking vessel according to one of claims 1 to 4, **characterized in that** the studs (22) are cylindrical or are formed as columns of rectangular section.

6. Cooking vessel according to one of claims 1 to 5, **characterized in that** the above-mentioned oil cavities (21) cover more than 70% of the inner surface of the vessel body.

7. Cooking vessel according to one of claims 1 to 6, **characterized in that** the depth of the oil cavities (21) is between 0.1 mm and 0.3 mm.

8. Cooking vessel according to one of claims 1 to 7, **characterized in that** the thickness of the nonstick coating (3) is up to 0.1 mm.

9. Cooking vessel according to one of claims 1 to 8, **characterized in that** spacing between adjacent oil cavities (21) is less than 1 mm.

10. Cooking vessel according to one of claims 1 to 9, **characterized in that** the thickness of the nonstick coating (3) is at least 0.05 mm less than the depth of the oil cavities (21).

## Revendications

1. Récipient de cuisson à revêtement anti-adhésif comprenant une poignée (1) et un corps de récipient (2), dans lequel
- la surface intérieure du corps de récipient (2) est pourvue d'une pluralité de creux d'huile (21) dont la face intérieure est pourvue de noppes dont la hauteur est inférieure à la profondeur desdits creux d'huile, et
- la surface supérieure desdits creux d'huile (21) est pourvue d'un revêtement anti-adhésif (3), l'épaisseur du revêtement anti-adhésif (3) étant supérieure à la hauteur des noppes (22) et en même temps inférieure à la profondeur des creux d'huile (21).

2. Récipient de cuisson selon la revendication 1, **caractérisé par le fait que** lesdits creux d'huile (21) sont réalisés de manière à être reliés ou non reliés entre eux.

3. Récipient de cuisson selon la revendication 1 ou 2, **caractérisé par le fait que** lesdits creux d'huile (21) sont pourvus d'un revêtement anti-adhésif (3) uniforme.

4. Récipient de cuisson selon l'une quelconque des revendications 1 à 3, **caractérisé par le fait que** lesdits creux d'huile (21) susmentionnés sont réalisés à section hexagonale, ronde, carrée ou polygonale.

5. Récipient de cuisson selon l'une quelconque des revendications 1 à 4, **caractérisé par le fait que** lesdites noppes (22) sont réalisées en forme de cylindre ou en tant que colonnes à section quadrangulaire.

6. Récipient de cuisson selon l'une quelconque des revendications 1 à 5, **caractérisé par le fait que** les creux d'huile (21) susmentionnés occupent plus de 70 % de la surface intérieure du corps de récipient.

7. Récipient de cuisson selon l'une quelconque des revendications 1 à 6, **caractérisé par le fait que** la profondeur des creux d'huile (21) est comprise entre 0,1 mm et 0,3 mm.

8. Récipient de cuisson selon l'une quelconque des revendications 1 à 7, **caractérisé par le fait que** l'épaisseur du revêtement anti-adhésif (3) va jusqu'à 0,1 mm.

9. Récipient de cuisson selon l'une quelconque des revendications 1 à 8, **caractérisé par le fait que** la distance séparant des creux d'huile (21) situés les uns à côté des autres est inférieure à 1 mm.

10. Récipient de cuisson selon l'une quelconque des revendications 1 à 9, **caractérisé par le fait que** l'épaisseur du revêtement anti-adhésif (3) est au moins 0,05 mm plus faible que la profondeur des creux d'huile (21).
